(19)

Europäisches
Patentamt
European
Patent Office
Office européen
des brevets

(11) **EP 4 506 088 A1**

(12) **EUROPEAN PATENT APPLICATION**
published in accordance with Art. 153(4) EPC

(43) Date of publication:
**12.02.2025 Bulletin 2025/07**

(21) Application number: **23811754.3**

(22) Date of filing: **19.05.2023**

(51) International Patent Classification (IPC):
**B23B 1/00** (2006.01)     **B23B 19/02** (2006.01)
**B23B 27/00** (2006.01)     **B23C 5/02** (2006.01)
**B23Q 1/52** (2006.01)      **B23Q 17/09** (2006.01)
**B23Q 17/22** (2006.01)

(52) Cooperative Patent Classification (CPC):
**B23B 1/00; B23B 27/00; B23C 5/02; B23Q 1/52;
B23Q 1/70; B23Q 17/09; B23Q 17/22**

(86) International application number:
**PCT/JP2023/018747**

(87) International publication number:
**WO 2023/228882 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.05.2022  JP 2022086411**

(71) Applicant: **Makino Milling Machine Co., Ltd.
Tokyo 152-8578 (JP)**

(72) Inventor: **HOSHI, Yoshio
Aiko-gun, Kanagawa 243-0303 (JP)**

(74) Representative: **McWilliams, David John
Withers & Rogers LLP
2 London Bridge
London SE1 9RA (GB)**

(54) **MACHINING METHOD, MACHINE TOOL, CUTTING TOOL, AND CUTTING INSERT**

(57)     A machining method for cutting process by making a workpiece (W) and a cutting tool (11) move relatively, characterized by using a cutting tool (11) comprising a cutting insert (28) having a first curved part (40a), a second curved part (40c) formed continuing from the first curved part (40a) and with a curvature smaller than the first curved part (40a), and a connecting part (40b) connecting the first curved part (40a) and the second curved part (40c) and by cutting while positioning the connecting part (40b) at the front end in the cut direction perpendicular to the direction of relative movement at the time of cutting.

Fig. 3

EP 4 506 088 A1

## Description

FIELD

The present invention relates to a machining method, machine tool, cutting tool, and cutting insert.

BACKGROUND

As a finishing tool for cutting process, an insert with a wiper blade, a wiper insert, etc. are well known, but if using these, the part contacting the workpiece, that is, the cut material, becomes broader, so easily generates heat. Therefore, for example, it may be considered to use an ISO standard insert and work inside a contact part of the nose part, but while the cutting resistance is reduced and heat generation is suppressed, there is a possibility of deterioration of the surface roughness being invited.

PTL 1 discloses a cutting tool where the shape of the nose part is divided into two parts of a nose part contiguous with a cross-cutting edge and a nose part contiguous with a front cutting edge, where the radius of curvature of the nose part contiguous with the front cutting edge is made larger than the radius of curvature of the nose part contiguous with the cross-cutting edge, and where a line connecting centers of curvature of the two nose parts becomes parallel with the cross-cutting edge. However, to make it parallel with the cross-cutting edge, it is necessary to make the nose part contiguous with the front cutting edge longer, so, for example, sometimes forming such a nose part at an ISO standard insert becomes difficult.

Further, PTL 2 discloses a cutting machine enabling a cutting tool attached to a front end of a turret shaft to cut a worked surface at the same cutting edge position at all times, that is, the same cutting angle. However, even if it were possible to keep the cutting resistance from increasing, sometimes deterioration of the surface roughness is invited.

[CITATIONS LIST]

[PATENT LITERATURE]

[PTL 1] Japanese Unexamined Utility Model Publication No. 55-165701
[PTL 2] Japanese Unexamined Patent Publication (Kokai) No. 2002-254273

SUMMARY

[TECHNICAL PROBLEM]

The present invention, in view of this situation, has as its object to provide a machining method, machine tool, cutting tool, and cutting insert able to keep down an increase in cutting resistance and make the surface roughness suitable.

[SOLUTION TO PROBLEM]

According to one aspect of the present invention, there is provided a machining method for cutting process by making a worked object and a cutting tool move relatively, which machining method uses a cutting tool comprising a first curved part, a second curved part formed continuing from the first curved part and with a curvature smaller than the first curved part, and a connecting part connecting the first curved part and the second curved part and cutting while positioning the connecting part at the front end in the cut direction perpendicular to the direction of relative movement at the time of cutting.

According to another aspect of the present invention, there is provided a machine tool for cutting process by making a worked object and a cutting tool move relatively, which machine tool comprises a posture changing device for changing a posture of at least one of the worked object or cutting tool and a control device for making the posture changing device operate so that a cutting tool comprising a first curved part, a second curved part formed continuing from the first curved part and with a curvature smaller than the first curved part, and a connecting part connecting the first curved part and the second curved part performs cutting while positioning the connecting part at the front end in the cut direction perpendicular to the direction of relative movement at the time of cutting.

According to still another aspect of the present invention, there is provided a cutting tool used for cutting process, which cutting tool comprises a base part having a shank part to be attached to a machine tool at one end part, a tool part attached to the other end part of the base part, and a cutting part arranged at the tool part and having a first curved part, a second curved part formed continuing from the first curved part and with a curvature smaller than the first curved part, and a connecting part connecting the first curved part and second curved part and positioned at the front end of the tool part.

According to still another aspect of the present invention, there is provided a cutting insert formed into a plate shape having a top surface, bottom surface, and side surfaces and comprising a fastened part for fastening to a cutting tool in cutting process, which cutting insert comprises a corner part having a first curved part formed along the side surfaces, a second curved part formed continuing from the first curved part and with a curvature smaller than the first curved part, a connecting part connecting one end part of the first curved part and the second curved part, and a cross-cutting edge formed at the side of the other end part of the first curved part and cuts while the connecting part is positioned at the front end in the cut direction perpendicular to the direction of relative movement at the time of cutting, the angle formed by a line connecting a center of curvature of the first curved part and a center of curvature of the second curved part with the cross-cutting edge when viewed from the top surface or bottom surface side becoming a cross-cutting edge angle.

[ADVANTAGEOUS EFFECTS OF INVENTION]

According to the machining method according to one aspect of the present invention, the worked object is worked by the first curved part, then the object is worked by the second curved part with a curvature smaller than the first curved part, so a cusp height of a machined surface can be made lower. For this reason, a surface roughness of the worked object after machining can be made a suitable one. Further, by performing cutting while the connecting part is positioned at the front end in the cut direction perpendicular to the direction of relative movement at the time of cutting, that is, while the connecting part is positioned so as to be contiguous with the machined surface of the worked object, it is possible to keep the contact part of the cutting tool and the machined surface of the worked object from becoming broader. For this reason, it is possible to keep down an increase in the cutting resistance.

According to the machine tool according to another aspect of the present invention, by machining a worked object by the first curved part, then machining it by the second curved part with the smaller curvature than the first curved part, it is possible to lower a cusp height of a machined surface. For this reason, a surface roughness of the worked object after machining can be made a suitable one. Further, the machine tool is comprised of a posture changing device and a control device for controlling the same. For this reason, by the control device operating the posture changing device, it is possible to change the posture of at least one of the worked object or cutting tool so that the connecting part is positioned at the front end in the cut direction perpendicular to the direction of relative movement at the time of cutting, that is, the connecting part becomes contiguous with the machined surface of the worked object. Due to this, it is possible to keep the contact part of the cutting tool and the machined surface of the worked object from becoming broader, so it is possible to keep down an increase in the cutting resistance.

According to the cutting tool according to another aspect of the present invention, by machining a worked object by the first curved part of the cutting part arranged at the tool part, then machining it by the second curved part with the smaller curvature than the first curved part, it is possible to lower a cusp height of a machined surface of the worked object. For this reason, the surface roughness of the worked object after machining can be made a suitable one. Further, by performing cutting while positioning the connecting part at the front end of the cut direction perpendicular to the direction of relative movement at the time of cutting, that is, while positioning the connecting part so as to be contiguous with the machined surface of the worked object, it is possible to keep the contact part of the cutting tool and the machined surface of the worked object from becoming broader. For this reason, it is possible to keep down an increase in the cutting resistance.

According to the cutting insert according to another aspect of the present invention, by machining a worked object by the first curved part of the corner part, then machining it by the second curved part with the smaller curvature than the first curved part, it is possible to lower a cusp height of a machined surface of the worked object. For this reason, the surface roughness of the worked object after machining can be made a suitable one. Further, by performing cutting while positioning the connecting part at the front end of the cut direction perpendicular to the direction of relative movement at the time of cutting, that is, while positioning the connecting part so as to be contiguous with the machined surface of the worked object, it is possible to keep the contact part of the cutting tool and the machined surface of the worked object from becoming broader. For this reason, it is possible to keep down an increase in the cutting resistance. Furthermore, the angle formed by a line connecting a center of curvature of the first curved part and a center of curvature of the second curved part with the cross-cutting edge can be made the cross-cutting edge angle, so it is possible to raise the degree of freedom of setting the length dimensions and radii of curvature of the first curved part and second curved part.

BRIEF DESCRIPTION OF DRAWINGS

FIG. 1 is a side surface view of a machine tool according to a first embodiment.
FIG. 2 is a side surface view of a cutting tool according to the first embodiment.
FIG. 3 is a perspective view of a cutting insert according to the first embodiment.
FIG. 4 is a plan view of a corner part according to the first embodiment.
FIG. 5 is an explanatory view of turning by a machine tool.
FIG. 6 is an explanatory view of cutting process by a cutting insert.
FIG. 7 is an explanatory view of taper turning process by a machine tool changing its posture.
FIG. 8 is a side surface view of a cutting tool according to a second embodiment.
FIG. 9 is a side surface view of a corner part according to a third embodiment.
FIG. 10 is an explanatory view of turning process by a machine tool according to a third embodiment.

DESCRIPTION OF EMBODIMENTS

Below, referring to the attached figures, a machining method, machine tool, cutting tool, and cutting insert according to the embodiments will be explained. Similar or corresponding components will be assigned the same notations and overlapping explanations will be omitted. To facilitate understanding, sometimes the scale of the figures will be changed for the explanation.

(First Embodiment)

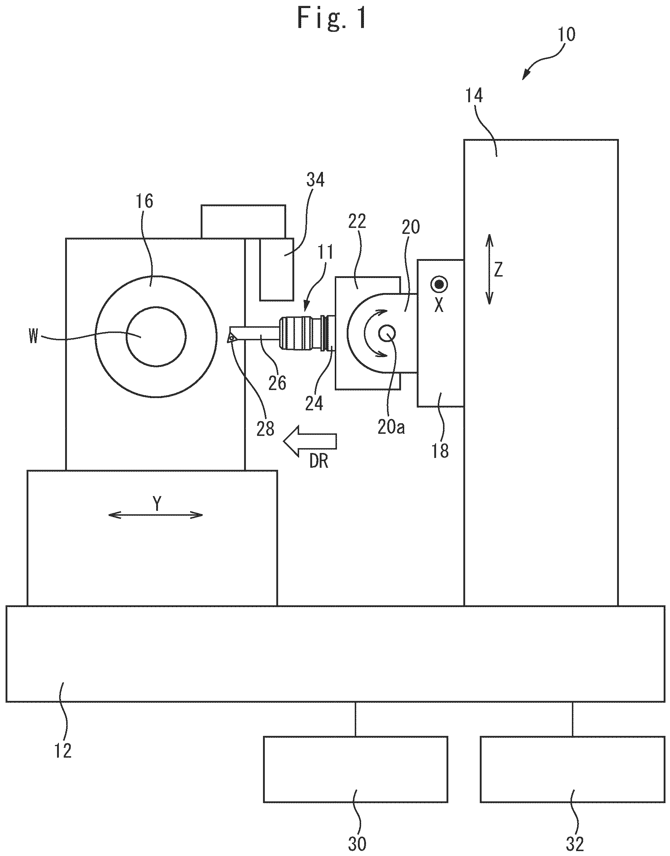

Below, referring to the attached drawings, preferable embodiments of the present invention will be explained. FIG. 1 is a side surface view of a machine tool according to a first embodiment. The machine tool 10 according to the present embodiment is a machine tool 10 for making a workpiece W of a worked object rotating together with a cutting tool 11 move relatively along a drive direction DR as a direction of relative movement for turning. The machine tool 10 comprises a bed 12 as a base fixed to a floor of a factory. Further, the machine tool 10 comprises a workpiece spindle 16 as a worked object attachment part arranged at an upper side of the bed 12 in the left-right direction, that is, at the left side in the Y-axis direction (left side in FIG. 1) and making the attached workpiece W rotate and a column 14 vertically standing and fixed on the top surface at the right side in the Y-axis direction (right side in FIG. 1) of the bed 12.

At the front surface side of the column 14, that is, the left side in the Y-axis direction, a saddle 18 is arranged for making the cutting tool 11 move along the Y-axis direction and Z-axis direction. Due to this, the cutting tool 11 and the workpiece spindle 16 can be made to relatively move along the X-axis direction and Z-axis direction of the drive direction DR. Further, the machine tool 10 comprises a Y-axis feed device (not shown) for making the cutting tool 11 and workpiece spindle 16 relatively move along the Y-axis direction of the drive direction DR.

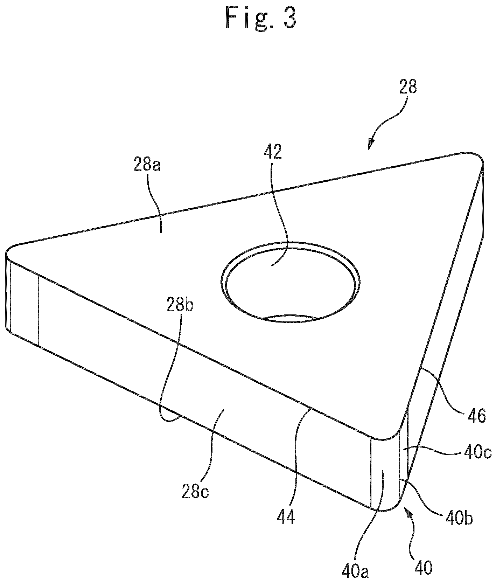

At the front surface side of the saddle 18, that is, the left side in the Y-axis direction, a posture changing device 20 having a shaft 20a extending along the X-axis direction is arranged. At the shaft 20a, a tool spindle 22 for attachment of a cutting tool 11 is connected. The posture changing device 20 is configured to be able to turn the tool spindle 22 connected to it about the shaft 20a. For this reason, it is possible to make the cutting tool 11 attached to the tool spindle 22 tilt with respect to the Y-axis direction and Z-axis direction. Due to this, when the cutting tool 11 is cutting, it is possible to adjust the position of the part contacting the workpiece W, that is, the later explained connecting part 40b (see FIG. 3). Note that, the posture changing device 20 may further comprise another shaft perpendicular to the shaft 20a and parallel with the Y-axis with the saddle 18. Due to this, it is possible to more freely change the posture of the cutting tool spindle 22.

Note that in the following explanation, the posture changing device 20 will be explained as being connected with the tool spindle 22 for attachment of the cutting tool 11, but the invention is not limited to this. It may also be connected to a workpiece spindle for attachment of a workpiece. It may also be connected to both of the tool spindle and workpiece spindle.

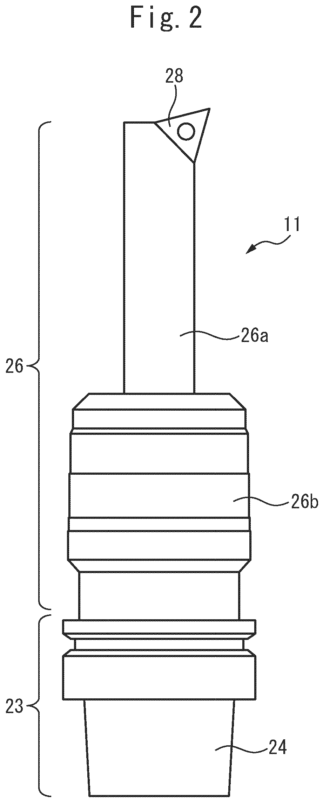

As shown in FIG. 2, the cutting tool 11 attached to the tool spindle 22 (see FIG. 1) has a base part 23 having a shank part 24 attached to one end part, that is, the end part at the tool spindle 22 side, and a tool part 26 attached to the other end part of the base part 23, that is, the end part at the opposite side from the tool spindle 22. The tool part 26 has a tool attachment part 26b attached to the base part 23 and a rod shaped shaft part 26a connected with the tool attachment part 26b. At the front end part of the shaft part 26a, a cutting insert 28 is fastened by screws as the cutting part for cutting process the workpiece W. Note that, here, as the cutting part of the cutting tool 11, a cutting insert 28 fastened by screws was explained, but the invention is not limited to this. The cutting part may be attached integrally with the shaft part or may be attached by silver solder or other means.

As shown in FIG. 1, the machine tool 10 comprises a control device 30 electrically connected with the posture changing device 20. The control device 30 can make the posture changing device 20 operate to turn the tool spindle 22 connected to this, that is, the posture of the cutting tool 11. Further, the machine tool 10 is electrically connected to the cutting tool 11, workpiece spindle 16, and control device 30 and has a load detecting device 32 which can detect the load of the cutting tool 11 at the time of cutting.

The load detecting device 32, for example, is arranged at the workpiece spindle 16, is electrically connected to a not shown motor making the workpiece W turn, and is configured to be able to detect a torque or current value of the motor. For this reason, if the torque or current value detected by the load detecting device 32 exceeds a predetermined threshold value and it is judged that the load of the workpiece spindle 16 is high, the control device 30 provisionally concludes the position of the cutting insert 28 is not suitable and operates the posture changing device 20, saddle 18, and Y-axis feed device to change the posture of the cutting tool 11. Due to this, it is possible to keep down an increase in the cutting resistance.

Note that below, the load detecting device 32 will be explained as one detecting a torque or current value of a motor arranged at the workpiece spindle 16, but the invention is not limited to this. When making the cutting tool rotate, the load detecting device, for example, may be configured to detect the torque or current value of the motor for making the cutting tool rotate, while when making both the workpiece spindle and cutting tool rotate, it may be configured to detect the torques or current values of the motors arranged at both of these.

At the workpiece spindle 16 side of the machine tool 10, a position detecting device 34 able to detect the position of a cutting insert 28, specifically, the connecting part 40b, is arranged. The position detecting device 34, for example, can detect the position of the connecting part 40b at the machine tool 10 by a camera or other imaging device or position sensor etc. Due to this, it is possible to obtain an accurate grasp of the actual position of a connecting part 40b after considering manufacturing error of the cutting tool 11 and cutting insert 28 and attachment error of the same etc. Note that the invention is not limited to this. The machine tool, for example, records and manages dimensional information of cutting tools and cutting inserts at its tool data management part and can detect the position of the connecting part based on this dimensional information.

FIG. 3 shows a perspective view of a cutting insert 28. Here, the cutting insert 28 is formed in a triangular plate shape having a top surface 28a, bottom surface 28b, and side surfaces 28c connecting the outer circumference of the top surface 28a and the outer circumference of the bottom surface 28b. For this reason, the cutting insert 28 has corner parts 40 at three locations. Note that the invention is not limited to this. The cutting insert may, for example, also be formed into a rectangular plate or polygonal plate and have corner parts at four or more locations. Further, at the center part of the cutting insert 28, a hole 42 used as the fastened part for fastening to the shaft part 26a of the cutting tool 11 is formed. Note that, here, the cutting insert 28 will be explained as being fixed by a screw part to a screw hole of the shaft part 26a of the cutting tool 11, but the invention is not limited to this. The cutting insert may press against the top surface or one side surface by clamp claws formed at the shaft part and sit on the bottom surface or another side surface to be fastened to the shaft part.

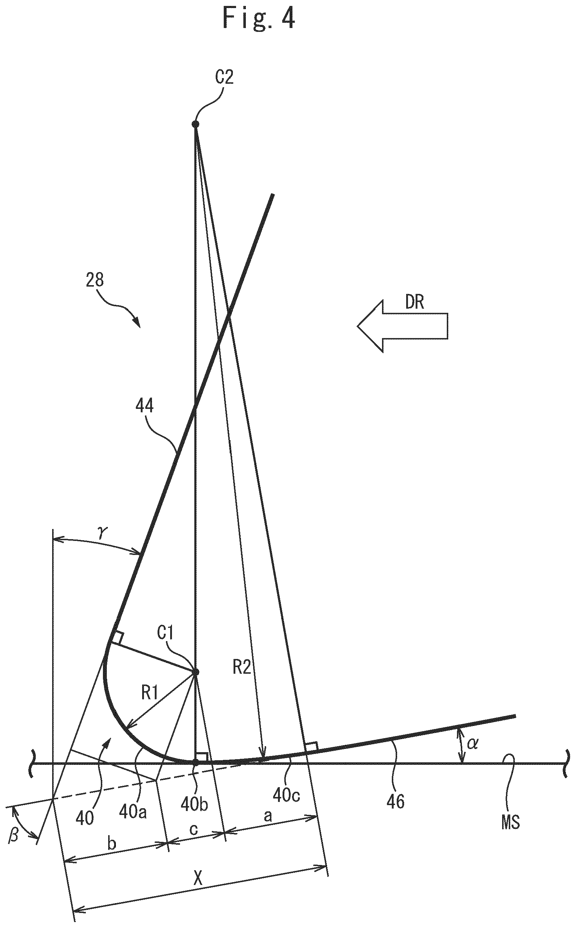

FIG. 4 shows a corner part 40 of the cutting insert 28. The corner part 40 has a first curved part 40a formed along the side surface 28c, a second curved part 40c formed continuing from the first curved part 40a and with a smaller curvature than the first curved part 40a, and a connecting part 40b connecting one end part of the first curved part 40a and the second curved part 40c. Further, the corner part 40 has a cross-cutting edge 44 formed at the end part at the opposite side from the connecting part of the first curved part 40a in a straight shape when seen by a plan view from the top surface 28a or bottom surface 28b side. Further, the front cutting edge 46 is formed straight so as to continue from the end part at the opposite side from the connecting part 40b of the second curved part 40c.

The dimensions of the corner part 40 are set in the following way. First, a front cutting edge angle $\alpha$, cutting edge angle $\beta$, radius of curvature R1 of the first curved part 40a, and radius of curvature R2 of the second curved part 40c are determined in accordance with the work application. Next, a length dimension of the second curved part 40c and a contact point of the second curved part 40c and the front cutting edge 46 are determined. Finally, the end point of the second curved part 40c, that is, the connecting part 40b of the first curved part 40a and the second curved part 40c, is determined from the length dimension of the second curved part 40c. The center of curvature C1 of the first curved part 40a is determined by the vertical drawn to the second curved part 40c at the connecting part 40b and the radius of curvature R1 of the first curved part 40a with a curvature shorter than the second curved part 40c. Due to this, it is possible to form a corner part 40 having a composite nose comprised of a combination of a consecutive first curved part 40a and second curved part 40c. The thus set dimensions of the first curved part 40a and second curved part 40c and processed length X of the corner part 40 satisfy the following relationship.

$$a=(R2-R1)\times\sin\alpha \quad (1)$$

$$b=R1/\sin\beta \quad (2)$$

$$c=[R2-\{(R2-R1)\times\cos\alpha\}]/\tan\beta \quad (3)$$

$$X=a+b+c \quad (4)$$

Here, in the case of a general cutting insert 28, the radius of curvature R2 of the second curved part 40c is preferably set to less than or equal to 10 mm. Note that the invention is not limited to this. The radius of curvature of the second curved part may also be set to greater than or equal to 10 mm corresponding to the dimensions and purpose of machining the workpiece.

The cutting insert 28 is attached to the shaft part 26a so that the connecting part 40b is positioned at the front end of the cutting tool 11 in the axial direction. Due to this, it is possible to cut while positioning the connecting part 40b to be positioned at the front end in the cut direction perpendicular to the drive direction DR at the time of cutting, that is, while positioning the connecting part 40b so as to abut against the machined surface MS of the workpiece W. Further, the front cutting edge angle $\alpha$ of the cutting insert 28 attached to the shaft part 26a in this way can be set to a desired front cutting edge angle $\alpha$. Furthermore, by the connecting part 40b being positioned at the front end in the cut direction perpendicular to the drive direction DR at the time of cutting, that is, by the connecting part 40b abutting against the machined surface MS of the workpiece W, the line connecting the center of curvature C1 of the first curved part 40a and the center of curvature C2 of the second curved part 40c becomes vertical to the machined surface MS of the workpiece W and the angle $\gamma$ formed by a line connecting a center of curvature C1 of the first curved part 40a and the center of curvature C2 of the second curved part 40c with the cross-cutting edge 44 becomes the cross-cutting edge angle $\gamma$.

These actions and effects will be explained below through explanation of cutting using the machining method, machine tool 10, cutting tool 11, and cutting insert 28 according to the present embodiment.

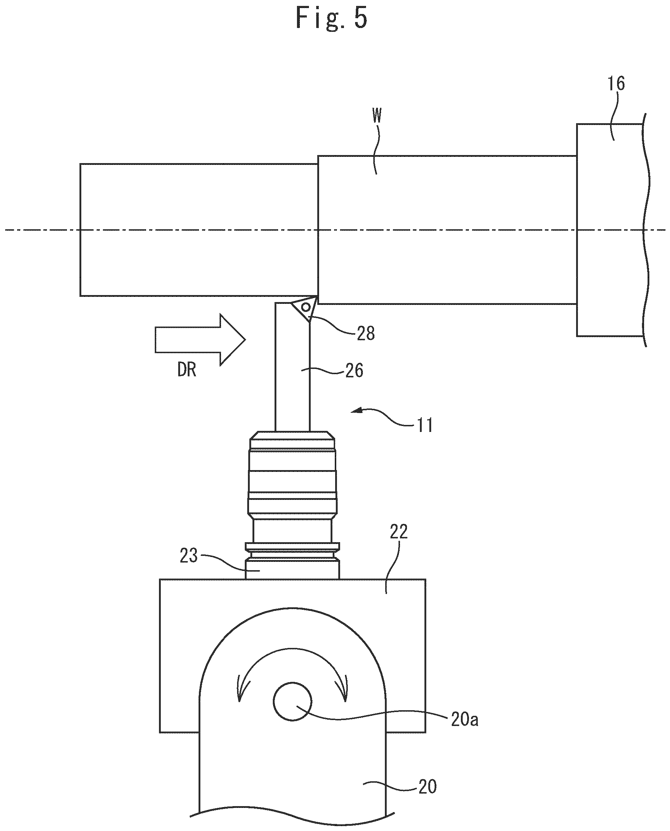

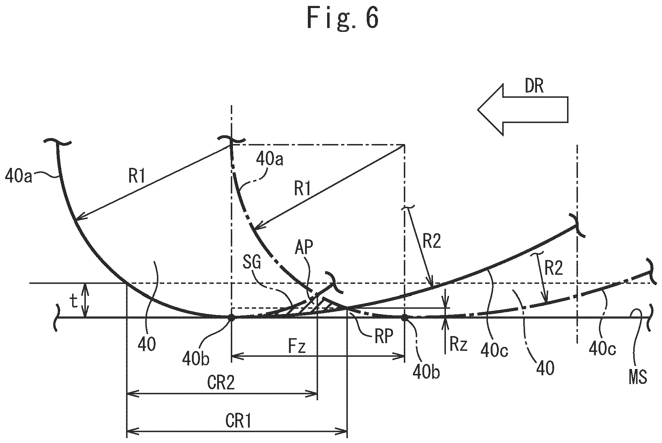

FIG. 5 shows the state of using the cutting tool 11 for turning, while FIG. 6 shows that the amount of removal of the workpiece W increases by cutting using a corner part 40 making the connecting part 40b abut against the machined surface MS of the workpiece W. FIG. 6 shows by a one-dot chain line (front) and solid line (rear) the front and rear corner parts 40 when the cutting insert 28 positioned in this way moves along the drive direction DR by exactly the length Fz each time the workpiece W turns once. At this time, the corner part 40 of the cutting insert 28 cuts the workpiece W by exactly the depth of cut "t" in the contact range CR1. At this time, the residual part RP of the cusp height Rz is formed.

FIG. 6 shows a single corner part SG having a single nose formed by just the first curved part 40a for comparison. The single corner part SG cuts the workpiece W by exactly the depth of cut "t" inside the contact range CR2. At this time, the residual part formed increases by exactly the part AP. From the comparison of these, due to the corner part 40 of the cutting insert 28 having a composite nos, the amount of cutting increases and the cusp height Rz of the residual part RP becomes lower, so the surface roughness is improved, that is, it is understood that the surface is kept from becoming rougher.

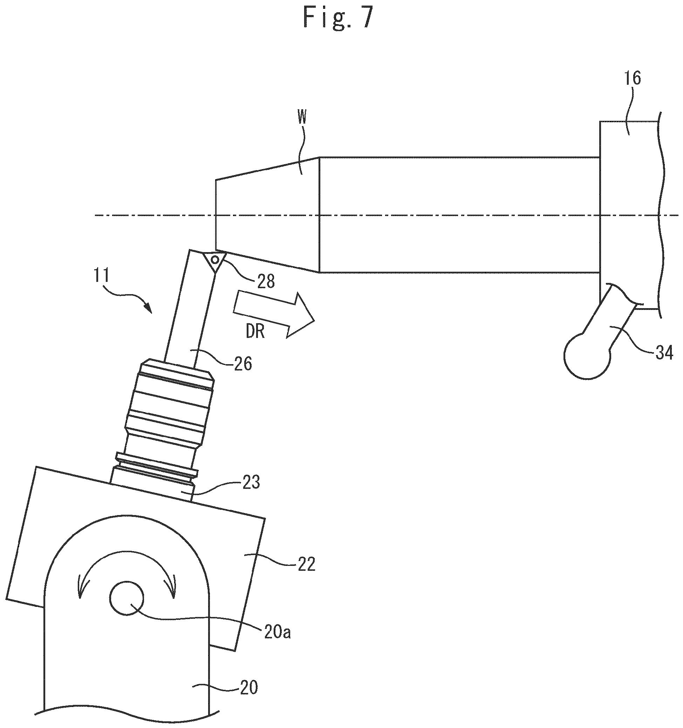

FIG. 7 shows the state of a machine tool taper turning while changing the posture. In this way, even if taper turning, the control device 30 can operate the posture changing device 20 to change the posture of the cutting tool 11. For this reason, as shown in FIG. 4, it is possible to cut while positioning the connecting part 40b to be positioned at the front end in the cut direction perpendicular to the drive direction DR at the time of cutting, that is, so that the connecting part 40b abuts against the machined surface MS of the workpiece W.

According to the machine tool 10 comprising the cutting tool 11 according to the present embodiment, by the workpiece W being cut by the first curved part 40a of the cutting insert 28 arranged at the tool part 26, then being cut by the second curved part 40c with a smaller curvature than the first curved part 40a, it is possible to lower the cusp height Rz of the machined surface MS of the workpiece W. For this reason, it is possible to make the surface roughness of the workpiece W after machining a suitable one. Further, the connecting part 40b is positioned at the front end in the cut direction perpendicular to the drive direction DR at the time of cutting. That is, by cutting while positioning the connecting part 40b to become contiguous with the machined surface MS of the workpiece W, it is possible to keep the contact part of the cutting tool 11 and the machined surface MS of the workpiece W from becoming broader. For this reason, it is possible to keep down an increase in the cutting resistance.

Further, according to the machine tool 10 according to the present embodiment, a control device 30 and load detecting device 32 are provided. For this reason, if the torque or current value detected by the load detecting device 32 exceeds a predetermined threshold value and it is judged that the load of the workpiece spindle 16 is high, the control device 30 provisionally concludes the position of the cutting insert 28 is not suitable and operates the posture changing device 20, saddle 18, and Y-axis feed device to change the posture of the cutting tool 11. Due to this, it is possible to keep down an increase in the cutting resistance.

Furthermore, according to the machine tool 10 according to the present embodiment, at the workpiece spindle 16 side, provision is made of a position detecting device 34 able to detect the position of the connecting part 40b of the cutting insert 28 and, for example, configured by a camera or other imaging device, position sensor, etc. For this reason, the position detecting device 34 can detect the position of the connecting part 40b at the machine tool 10. Due to this, it is possible to obtain an accurate grasp of the actual position of a connecting part 40b after considering manufacturing error of the cutting tool 11 and cutting inserts 28 and attachment error of the same etc.

According to the cutting insert 28 according to the present embodiment, the angle formed by a line connecting a center of curvature C1 of the first curved part 40a and a center of curvature C2 of the second curved part 40c with the cross-cutting edge 44 can be made the cross-cutting edge angle $\gamma$. For this reason, it is possible to raise the degree of freedom of setting the length dimensions and radii of curvature R1, R2 of the first curved part 40a and second curved part 40c.

Due to the above, according to the machining method, machine tool 10, cutting tool 11, and cutting insert 28 according to the present embodiment, it is possible to keep down the increase in the cutting resistance and make the surface roughness of the machined surface MS of the workpiece W a suitable one.

(Second Embodiment)

Below, a milling tool 60 used as the cutting tool according to the second embodiment will be explained. Components similar or corresponding to the first embodiment will be assigned the same notations and overlapping explanations will be omitted.

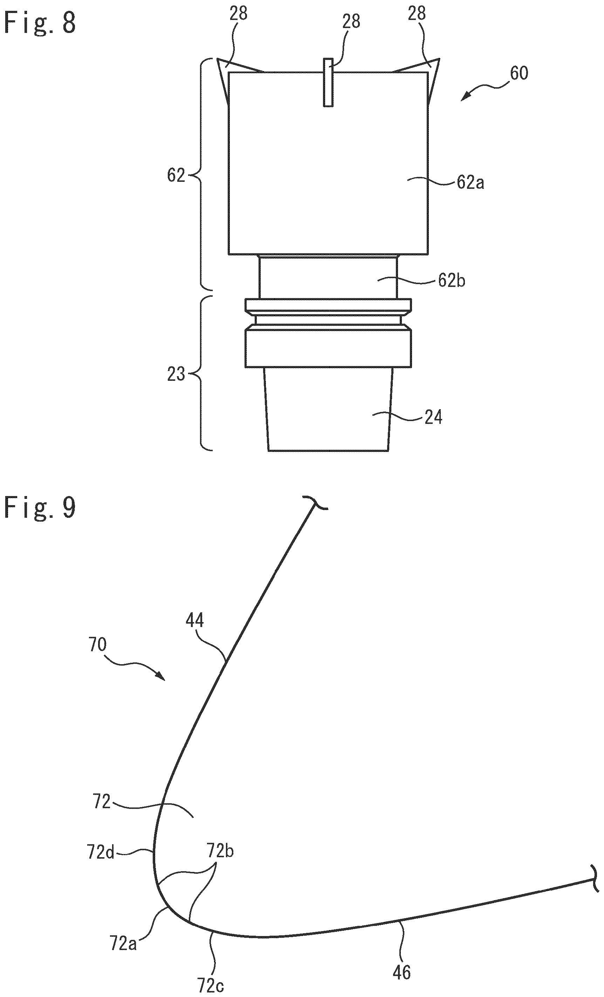

FIG. 8 shows a milling tool 60 to which a plurality of cutting inserts 28 are attached. The tool part 62 of the milling tool 60 has a tool attachment part 62b to be attached to the base part 23 and a columnar shaft part 62a connected to the tool attachment part 62b. At the front end part of the shaft part 62a, cutting inserts 28 used as cutting parts formed integrally with the same are arranged at equal intervals along the circumferential direction of the shaft part 62a.

According to the milling tool 60 according to the present embodiment, as shown in FIG. 6 and FIG. 8, by the workpiece W being milled by the first curved parts 40a of the cutting inserts 28 arranged at the tool part 62, then being milled by the second curved parts 40c with the curvatures smaller than the first curved parts 40a, it is possible to lower the cusp height Rz of the machined surface MS of the workpiece W. For this reason, it is possible to make the surface roughness of the worked workpiece W a suitable one. Further, by cutting while positioning the connecting part 40b so as to be contiguous with the machined surface MS of the workpiece W, it is possible to keep the contact part of the cutting tool 11 and the machined surface MS of the workpiece W from becoming broader. For this reason, it is possible to keep down an increase in the cutting resistance.

(Third Embodiment)

Below, the cutting insert 70 used as the cutting tool according to the third embodiment will be explained. Components similar or corresponding to the first embodiment will be assigned the same notations and overlapping explanations will be omitted.

FIG. 9 shows a corner part 72 of a cutting insert 70. The corner part 72 has a first curved part 72a, a second curved part 72c formed continuing from the first curved part 72a and with a smaller curvature than the first curved part 72a, and a connecting part 72b connecting the end part of the first curved part 72a at the front cutting edge 46 side and the second curved part 72c. Further, the corner part 72 has, at the cross-cutting edge 44 side of the first curved part 72a, a third curved part 72d with the same radius of curvature R2 and length dimension as the second curved part 72c and a connecting part 72b connecting the first curved part 72a and the third curved part 72d.

The dimensions of the corner part 72 are set in the following way. First, a front cutting edge angle α, cutting edge angle β, radius of curvature R1 of the first curved part 72a, and radius of curvature R2 of the second curved part 72c and third curved part 72d are determined in accordance with the work application. Next, the length dimensions of the second curved part 72c and third curved part 72d and the contact point of the second curved part 72c and front cutting edge 46 and contact point of the third curved part 72d and cross-cutting edge 44 are determined. Finally, the end points of the second curved part 72c and third curved part 72d, that is, the connecting parts 72b with the first curved part 72a, are determined from the length direction of the second curved part 72c and third curved part 72d. The center of curvature C1 of the first curved part 72a is determined by the vertical drawn at the second curved part 72c or third curved part 72d at the connecting part 72b and the radius of curvature R1 of the first curved part 72a. Due to this, it is possible to form a corner part 72 combining the three successive noses of the first curved part 72a, second curved part 72c, and third curved part 72d.

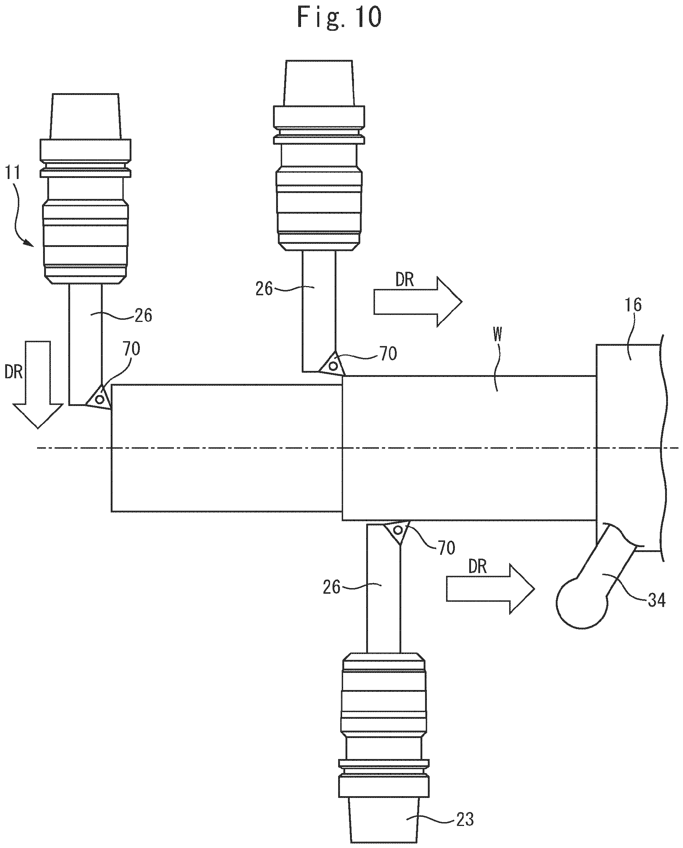

FIG. 10 shows the state of cutting in a plurality of drive directions DR. As shown in the figure, the postures of the plurality of cutting inserts 70 attached to the cutting tool 11 differ depending on the machining position. According to the cutting inserts 70 according to the present embodiment, the second curved part 72c and third curved part 72d are formed symmetrically with respect to the first curved part 72a. For this reason, there is no need to individually manage right side only and left side only cutting inserts 70. A single type of cutting insert 70 can be used for cutting process in different directions. Due to this, it is not necessary to reattach cutting inserts 70 in accordance with the drive direction and efficient cutting becomes possible.

Above, embodiments of a machining method, machine tool 10, cutting tool 11, and cutting insert 28 were explained, but the present invention is not limited to the above embodiments. A person skilled in the art could understand that various modifications of the above embodiments would be possible.

REFERENCE SIGNS LIST

10 machine tool
11 cutting tool
16 workpiece spindle (worked object attachment part)
20 posture changing device
23 base part
24 shank part
26 tool part
28 cutting insert (cutting part)
28a top surface
28b bottom surface
28c side surface
30 control device
32 load detecting device
34 position detecting device
40 corner part
40a first curved part
40b connecting part
40c second curved part
42 hole (fastened part)
44 cross-cutting edge
60 milling tool (cutting tool)
62 tool part
70 cutting insert (cutting part)
72 corner part
72a first curved part
72b connecting part
72c second curved part
72d third curved part
C1 center of curvature of first curved part
C2 center of curvature of second curved part
DR drive direction (relative movement direction)
W workpiece (worked object)

**Claims**

1. A machining method for cutting process by making a worked object and a cutting tool move relatively, which machining method uses a cutting tool comprising a cutting part having a first curved part, a second curved part formed continuing from the first curved part and with a curvature smaller than the first curved part, and a connecting part connecting the first curved part and the second curved part and cutting while positioning the connecting part at the front end in the cut direction perpendicular to the direction of relative movement at the time of cutting.

2. A machine tool for cutting process by making a worked object and a cutting tool move relatively, which machine tool comprises

   a posture changing device for changing a posture of at least one of the worked object or cutting tool and
   a control device for making the posture changing device operate so that a cutting tool comprising a cutting part having a first curved part, a second curved part formed continuing from the first curved part and with a curvature smaller than the first curved part, and a connecting part connecting the first curved part and the second curved part cuts by positioning the connecting part at the front end in the cut direction perpendicular to the direction of relative movement at the time of cutting.

3. The machine tool according to claim 2, wherein the posture changing device is arranged at least at one of a spindle for attachment of the cutting tool or a worked object attachment part for attachment of the worked object.

4. The machine tool according to claim 3, further comprising a position detecting device able to detect a position of the connecting part.

5. The machine tool according to any one of claim 2 to claim 4, further comprising a load detecting device able to detect a load at the time of cutting.

6. A cutting tool used for cutting process, which cutting tool comprises

   a base part having a shank part to be attached to a machine tool at one end part,
   a tool part attached to the other end part of the base part, and
   a cutting part arranged at the tool part and having a first curved part, a second curved part formed continuing from the first curved part and with a curvature smaller than the first curved part, and a connecting part connecting the first curved part and second curved part and positioned at the front end of the tool part.

7. The cutting tool according to claim 6, wherein the cutting part is arranged so that the connecting part is positioned at at least one front end of the cutting tool in the axial direction or the radial direction.

8. The cutting tool according to claim 6 or claim 7, wherein the cutting tool is a turning tool for machining a rotating worked object.

9. The cutting tool according to claim 6 or claim 7, wherein the cutting tool is a milling tool for machining a worked object while rotating.

10. A cutting insert formed into a plate shape having a top surface, bottom surface, and side surfaces and comprising a fastened part for fastening to a cutting tool in cutting process, which cutting insert

    comprises a corner part having a first curved part formed along the side surfaces, a second curved part formed continuing from the first curved part and with a curvature smaller than the first curved part, a connecting part connecting one end part of the first curved part and the second curved part, and a cross-cutting edge formed at the side of the other end part of the first curved part, and cuts while the connecting part is positioned at the front end in the cut direction perpendicular to the direction of relative movement at the time of cutting,
    the angle formed by a line connecting a center of curvature of the first curved part and a center of curvature of the second curved part with the cross-cutting edge when viewed from the top surface or bottom surface side becoming a cross-cutting edge angle.

11. The cutting insert according to claim 10, wherein the corner part has a third curved part formed continuing from the other end part of the first curved part and with a shape the same as the second curved part.

# Fig.1

# Fig. 2

Fig. 3

Fig. 4

Fig. 5

# Fig. 6

Fig. 7

Fig. 8

28    28    28

60

62 {
62a
62b

23 {
24

Fig. 9

70
44
72
72d    72b
72a
72c    46

# Fig. 10

**INTERNATIONAL SEARCH REPORT**

International application No.

**PCT/JP2023/018747**

| A. | CLASSIFICATION OF SUBJECT MATTER |
|---|---|

***B23B 1/00***(2006.01)i; ***B23B 19/02***(2006.01)i; ***B23B 27/00***(2006.01)i; ***B23C 5/02***(2006.01)i; ***B23Q 1/52***(2006.01)i; ***B23Q 17/09***(2006.01)i; ***B23Q 17/22***(2006.01)i

FI:  B23B1/00 N; B23B19/02 E; B23B27/00 A; B23C5/02; B23Q1/52; B23Q17/09 H; B23Q17/22 Z

According to International Patent Classification (IPC) or to both national classification and IPC

| B. | FIELDS SEARCHED |
|---|---|

Minimum documentation searched (classification system followed by classification symbols)

B23B1/00; B23B19/02; B23B27/00; B23B51/02; B23C5/02; B23Q1/52; B23Q17/09; B23Q17/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-123552 A (MITSUBISHI MATERIALS CORP.) 06 July 2015 (2015-07-06) paragraph [0026], fig. 7, 9 | 1 |
| X | WO 2019/087496 A1 (SUMITOMO ELECTRIC HARDMETAL CORP.) 09 May 2019 (2019-05-09) paragraphs [0034]-[0036], [0097], fig. 7, 23 | 6-8 |
| X | JP 2020-536749 A (ISCAR LTD.) 17 December 2020 (2020-12-17) paragraphs [0047], [0048], fig. 3b, 9 | 6-7, 9 |
| A | JP 2007-319986 A (TUNGALOY CORP.) 13 December 2007 (2007-12-13) | 1-11 |

☐ Further documents are listed in the continuation of Box C.      ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## EP 4 506 088 A1

**INTERNATIONAL SEARCH REPORT**
Information on patent family members

International application No.

**PCT/JP2023/018747**

| Patent document cited in search report | | | Publication date (day/month/year) | Patent family member(s) | | | Publication date (day/month/year) |
|---|---|---|---|---|---|---|---|
| JP | 2015-123552 | A | 06 July 2015 | US | 2017/0028481 | A1 | |
| | | | | paragraph [0045], fig. 7, 9 | | | |
| | | | | WO | 2015/098646 | A1 | |
| | | | | EP | 3088111 | A1 | |
| | | | | CN | 105792968 | A | |
| | | | | KR | 10-2016-0101158 | A | |
| WO | 2019/087496 | A1 | 09 May 2019 | US | 2020/0338645 | A1 | |
| | | | | paragraphs [0065]-[0067], [0129], fig. 7, 23 | | | |
| | | | | EP | 3527310 | A1 | |
| | | | | CN | 110035851 | A | |
| | | | | KR | 10-2019-0077027 | A | |
| JP | 2020-536749 | A | 17 December 2020 | US | 2019/0105718 | A1 | |
| | | | | paragraphs [0071], [0072], fig. 3b, 9 | | | |
| | | | | WO | 2019/073468 | A1 | |
| | | | | EP | 3694667 | A1 | |
| | | | | CN | 111182990 | A | |
| | | | | KR | 10-2020-0063171 | A | |
| JP | 2007-319986 | A | 13 December 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55165701 U
- JP 2002254273 A